# EUROPÄISCHE PATENTSCHRIFT

(11) **EP 3 900 275 B1**
(45) Veröffentlichungstag und Bekanntmachung des Hinweises auf die Patenterteilung: **07.01.2026**
(21) Anmeldenummer: 19809829.5
(22) Anmeldetag: 27.11.2019
(51) Int. Cl.: H04L 12/403, H04L 9/32, H04L 9/40, H04L 12/40

(54) **RECHENEINRICHTUNG UND VERFAHREN ZUM BETREIBEN EINER RECHENEINRICHTUNG**
COMPUTING DEVICE AND METHOD FOR OPERATING A COMPUTING DEVICE
DISPOSITIF DE CALCUL ET SON PROCÉDÉ DE FONCTIONNEMENT

(30) Priorität: 17.12.2018 DE 102018221954
(43) Veröffentlichungstag der Anmeldung: 27.10.2021
(73) Patentinhaber: Robert Bosch GmbH, 70442 Stuttgart (DE)
(72) Erfinder: POHL, Christopher, 40489 Duesseldorf (DE); STUMPF, Frederic, 71229 Leonberg (DE)
(86) Internationale Anmeldenummer: PCT/EP2019/082704
(87) Internationale Veröffentlichungsnummer: WO 2020/126365

(56) Entgegenhaltungen:
- DE-A1- 102013 206 202
- DE-A1- 102015 104 167
- DE-A1- 102017 125 826

## Beschreibung

### Stand der Technik

Die Offenbarung betrifft eine Recheneinrichtung, insbesondere für ein Steuergerät eines Kraftfahrzeugs, wobei die Recheneinrichtung dazu ausgebildet ist, Nachrichten von wenigstens einer externen Einheit zu empfangen.

Die Offenbarung betrifft ferner ein Verfahren zum Betreiben einer derartigen Recheneinrichtung.

DE 10 2015 104 167 A1 beschreibt ein Kombinationsmodul, das eine Teilmenge einer Vielzahl aufeinanderfolgender Datenblöcke kombiniert, um einen Kombinationsblock zu bilden. DE 10 2013 206 202 A1 beschreibt ein Sensormodul und ein Verfahren zum Betreiben eines Sensormoduls.

### Offenbarung der Erfindung

Bevorzugte Ausführungsformen beziehen sich auf eine Recheneinrichtung, insbesondere für ein Steuergerät eines Kraftfahrzeugs, wobei die Recheneinrichtung dazu ausgebildet ist, Nachrichten von wenigstens einer externen Einheit, beispielsweise weiteren Steuergeräten, zu empfangen, wobei die Recheneinrichtung dazu ausgebildet ist, die empfangenen Nachrichten zumindest zeitweise zu speichern und eine Mehrzahl der empfangenen Nachrichten einem Kryptografiemodul zu übermitteln, das dazu ausgebildet ist, eine Überprüfung der übermittelten Nachrichten auszuführen. Auf diese Weise kann eine effiziente Überprüfung der mehreren übermittelten Nachrichten erfolgen.

Es ist vorgesehen, dass die Recheneinrichtung dazu ausgebildet ist, ein Ergebnis der Überprüfung von dem Kryptografiemodul zu empfangen und wenigstens eine der Mehrzahl der empfangenen Nachrichten in Abhängigkeit des Ergebnisses der Überprüfung zu verarbeiten.

Bei weiteren bevorzugten Ausführungsformen ist vorgesehen, dass die Recheneinrichtung dazu ausgebildet ist, auf eine vorgebbare Mindestanzahl von empfangenen Nachrichten zu warten, bevor die Mehrzahl der empfangenen Nachrichten dem Kryptografiemodul übermittelt wird.

Bei weiteren bevorzugten Ausführungsformen ist vorgesehen, dass die Recheneinrichtung dazu ausgebildet ist, für eine vorgebbare Zeitdauer zu warten, bevor die Mehrzahl der, insbesondere während der vorgebbaren Zeitdauer, empfangenen Nachrichten dem Kryptografiemodul übermittelt wird.

Bei weiteren bevorzugten Ausführungsformen ist vorgesehen, dass das zumindest zeitweise Speichern empfangener Nachrichten ein zumindest zeitweises Speichern der empfangenen Nachrichten in einer Speichereinrichtung umfasst, auf die sowohl die Recheneinrichtung als auch das Kryptografiemodul zugreifen kann, wobei das Übermitteln die folgenden Schritte umfasst: Übergeben von ersten Steuerinformationen, die einen Speicherbereich der Speichereinrichtung charakterisieren, in dem die empfangenen Nachrichten gespeichert sind.

Bei weiteren bevorzugten Ausführungsformen ist vorgesehen, dass die ersten Steuerinformationen wenigstens einen Zeiger und/oder eine Anzahl der empfangenen Nachrichten umfassen.

Bei weiteren bevorzugten Ausführungsformen ist vorgesehen, dass die Recheneinrichtung dazu ausgebildet ist, zweite Steuerinformationen an das Kryptografiemodul zu übergeben, wobei die zweiten Steuerinformationen einen Speicherbereich bzw. eine Adresse in der Speichereinrichtung charakterisieren, in welchen Speicherbereich bzw. an welche Adresse das Kryptografiemodul ein bzw. das Ergebnis der Überprüfung schreiben soll.

Bei weiteren bevorzugten Ausführungsformen ist vorgesehen, dass die Recheneinrichtung dazu ausgebildet ist, keine Verarbeitung einer empfangenen Nachricht auszuführen, wenn die empfangene Nachricht nicht bereits durch das Kryptografiemodul überprüft worden ist. Dadurch ist sichergestellt, dass nur durch das Kryptografiemodul überprüfte Nachrichten verarbeitet werden.

Bei weiteren bevorzugten Ausführungsformen ist vorgesehen, dass das Kryptografiemodul in die Recheneinrichtung integriert ist und/oder dass das Kryptografiemodul auf demselben Halbleitersubstrat angeordnet ist wie die Recheneinrichtung, was eine besonders klein bauende Konfiguration ergibt.

Bei weiteren bevorzugten Ausführungen kann auch vorgesehen sein, dass die Recheneinrichtung alternativ oder ergänzend zu den von einer externen Einheit zu empfangenden Nachrichten N generell Daten bzw. Nachrichten aus anderen Quellen (beispielsweise auch selbst durch die Recheneinrichtung gebildete Daten bzw. Nachrichten) erhält bzw. ermittelt und diese optional unter Anwendung eines kryptografischen Verfahrens bearbeitet bzw. bearbeiten lässt (insbesondere durch das Kryptografiemodul), beispielsweise mit einer kryptografischen Signatur versieht bzw. versehen lässt. Hierzu kann die Recheneinrichtung bei weiteren bevorzugten Ausführungsformen die genannten (aus anderen Quellen erhaltenen und/oder selbst gebildeten) Nachrichten dem Kryptografiemodul übermitteln, vorzugsweise wiederum eine Mehrzahl der genannten Nachrichten, wobei das Kryptografiemodul bei weiteren bevorzugten Ausführungsformen diese Nachrichten (z.B. anstelle der vorstehend beschriebenen Überprüfung) mit der kryptografischen Signatur versieht, vorzugsweise alle der genannten Mehrzahl der Nachrichten zunächst mit der Signatur versieht, und bei weiteren bevorzugten Ausführungsformen die mit der Signatur versehenen Nachrichten sodann an die Recheneinrichtung übermittelt, die bei weiteren bevorzugten Ausführungsformen die signierten Nachrichten dann beispielsweise an weitere Recheneinrichtungen bzw. Steuergeräte übermittelt.

Weitere bevorzugte Ausführungsformen beziehen sich auf ein Verfahren zum Betreiben einer Recheneinrichtung nach Anspruch 9.

Weitere bevorzugte Ausführungsformen beziehen sich auf ein System nach Anspruch 10.

Bei weiteren bevorzugten Ausführungsformen ist vorgesehen, dass das Ausführen der Überprüfung unter Verwendung eines schlüsselbasierten Nachrichtenauthentifizierungscodes, CMAC, englisch: Cipher-based Message Authentication Code, erfolgt. Dadurch ist eine besonders effiziente Überprüfung ermöglicht. Eine Internetpublikation, die sich auf eine beispielhafte Ausgestaltung des CMAC-Verfahrens bezieht, ist beispielsweise unter https://doi.org/10.6028%2Fnist.sp.800-38b abrufbar.

Bei weiteren bevorzugten Ausführungsformen ist vorgesehen, dass das Kryptografiemodul dazu ausgebildet ist, ein Ergebnis der Überprüfung an die Recheneinrichtung zu senden, wobei das Senden insbesondere das Schreiben von das Ergebnis charakterisierenden Ergebnisinformationen in einen vorgebbaren Speicherbereich einer Speichereinrichtung umfasst, auf die sowohl die Recheneinrichtung als auch das Kryptografiemodul zugreifen können.

Weitere bevorzugte Ausführungsformen beziehen sich auf eine Verwendung der Recheneinrichtung gemäß den Ausführungsformen und/oder des Verfahrens gemäß den Ausführungsformen und/oder des Systems gemäß den Ausführungsformen zur Verarbeitung von Nachrichten, insbesondere von über ein Bussystems eines Fahrzeugs, insbesondere Kraftfahrzeugs, übermittelten Nachrichten.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind.

In der Zeichnung zeigt:
- Figur 1: schematisch ein vereinfachtes Blockdiagramm einer Recheneinrichtung gemäß bevorzugten Ausführungsformen,
- Figur 2: schematisch ein vereinfachtes Flussdiagramm eines Verfahrens gemäß weiteren bevorzugten Ausführungsformen,
- Figur 3: schematisch ein vereinfachtes Flussdiagramm eines Verfahrens gemäß weiteren bevorzugten Ausführungsformen,
- Figur 4: schematisch ein vereinfachtes Flussdiagramm eines Verfahrens gemäß weiteren bevorzugten Ausführungsformen,
- Figur 5A, 5B: jeweils schematisch ein vereinfachtes Flussdiagramm eines Verfahrens gemäß weiteren bevorzugten Ausführungsformen,
- Figur 6: schematisch ein vereinfachtes Blockdiagramm einer Recheneinrichtung gemäß weiteren bevorzugten Ausführungsformen,
- Figur 7: schematisch ein vereinfachtes Blockdiagramm einer Recheneinrichtung gemäß weiteren bevorzugten Ausführungsformen,
- Figur 8: schematisch ein vereinfachtes Blockdiagramm eines Halbleitersubstrats gemäß weiteren bevorzugten Ausführungsformen, und
- Figur 9: schematisch ein vereinfachtes Blockdiagramm eines Steuergeräts gemäß weiteren bevorzugten Ausführungsformen.

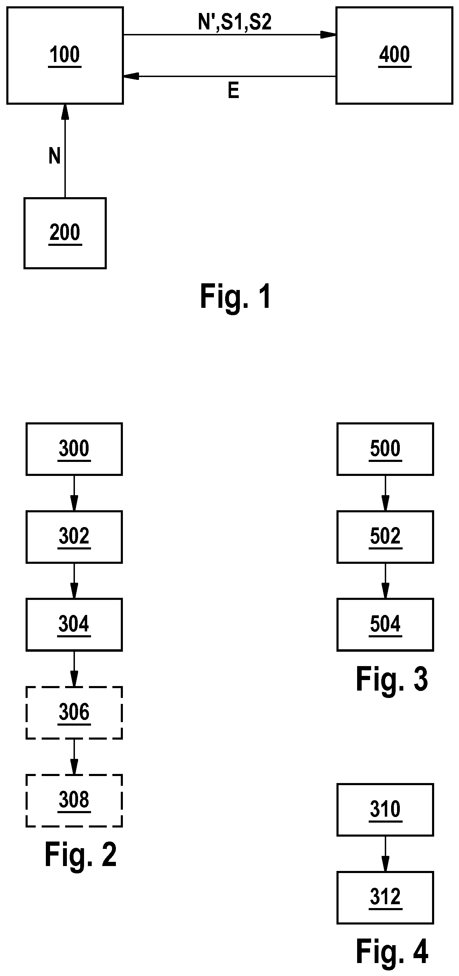

Figur 1 zeigt schematisch ein vereinfachtes Blockdiagramm einer Recheneinrichtung 100 gemäß bevorzugten Ausführungsformen. Die Recheneinrichtung 100 ist dazu ausgebildet, Nachrichten N (oder generell beliebige Daten) von wenigstens einer externen Einheit 200, beispielsweise einem Steuergerät, zu empfangen, die empfangenen Nachrichten N zumindest zeitweise zu speichern, und eine Mehrzahl N' der empfangenen Nachrichten N einem Kryptografiemodul 400 zu übermitteln, das dazu ausgebildet ist, eine Überprüfung der übermittelten Nachrichten N' auszuführen. Auf diese Weise kann eine effiziente Überprüfung der mehreren übermittelten Nachrichten N' erfolgen, und die Mehrzahl N' der Nachrichten kann durch die Recheneinrichtung 100 besonders ressourcenschonend, z.B. als ein zusammenhängender Block von Daten, an das Kryptografiemodul 400 übermittelt werden, beispielsweise im Gegensatz zu einer wiederholten Übermittlung einzelner Nachrichten.

Figur 2 zeigt schematisch ein vereinfachtes Flussdiagramm eines Verfahrens gemäß weiteren bevorzugten Ausführungsformen. In Schritt 300 empfängt die Vorrichtung 100 (Fig. 1) die Nachrichten N (oder generell beliebige Daten) von der externen Einheit 200 (oder von mehreren verschiedenen Einheiten, nicht gezeigt). In Schritt 302 speichert die Recheneinrichtung 100 die empfangenen Nachrichten N zumindest zeitweise. In Schritt 304 übermittelt die Recheneinrichtung 100 die Mehrzahl N' der empfangenen Nachrichten dem Kryptografiemodul 400 zur Prüfung.

Die Recheneinrichtung 100 ist dazu ausgebildet, ein Ergebnis E (Fig. 1) der Überprüfung von dem Kryptografiemodul 400 zu empfangen, vergleiche den Schritt 306 aus Figur 2 und wenigstens eine der Mehrzahl der empfangenen Nachrichten N in Abhängigkeit des Ergebnisses E der Überprüfung zu verarbeiten, vergleiche den Schritt 308 aus Figur 2.

Bei weiteren bevorzugten Ausführungsformen kann die Recheneinrichtung 100 nach dem Übermitteln aus Schritt 304 und insbesondere vor dem Empfangen des Ergebnisses E gemäß Schritt 306 weitere Aufgaben ausführen, wodurch der Zeitraum, den das Kryptografiemodul 400 gegebenenfalls für die Überprüfung der zuvor ermittelten zu prüfenden Nachrichten benötigt, anderweitig durch die Recheneinrichtung 100 genutzt werden kann. Beispielsweise können in dem genannten Zeitraum durch die Recheneinrichtung 100 früher durch das Kryptografiemodul 400 mitgeteilte Ergebnisse bzw. zugehörige empfangene Nachrichten verarbeitet werden.

Figur 3 zeigt schematisch ein vereinfachtes Flussdiagramm eines Verfahrens gemäß weiteren bevorzugten Ausführungsformen, das die Verarbeitung von Nachrichten durch das Kryptografiemodul 400 beschreibt. In Schritt 500 empfängt das Kryptografiemodul 400 die Mehrzahl N' von Nachrichten, von der Recheneinrichtung 100 in Schritt 304 an das Kryptografiemodul 400 übermittelt worden sind. In Schritt 502 führt das Kryptografiemodul 400 eine Überprüfung der von der Recheneinrichtung 100 empfangenen Nachrichten aus. Bei weiteren bevorzugten Ausführungsformen erfolgt das Ausführen der Überprüfung nach Schritt 502 von Figur 3 unter Verwendung eines schlüsselbasierten Nachrichtenauthentifizierungscodes, CMAC. Beispielsweise kann für eine betreffende zu überprüfende Nachricht ein CMAC-Referenzwert vorgesehen sein, auf den das Kryptografiemodul 400 zugreifen kann. Für den Schritt 502 des Überprüfens kann das Kryptografiemodul 400 vorteilhaft unter Anwendung eines CMAC-Verfahrens einen aktuellen CMAC-Wert in Abhängigkeit der empfangenen zu überprüfenden Nachricht bilden und ihn mit dem CMAC-Referenzwert vergleichen. Sofern der Vergleich ergibt, dass die miteinander verglichenen Werte gleich sind, kann das Kryptografiemodul 400 auf die Echtheit der überprüften Nachricht schließen und ein entsprechendes Ergebnis E der Überprüfung bereitstellen. Sofern die verglichenen Werte nicht miteinander übereinstimmen, kann darauf geschlossen werden, dass die aktuell empfangene und überprüfte Nachricht nicht ordnungsgemäß ist, beispielsweise manipuliert (und/oder unabsichtlich verfälscht) worden ist.

Bei weiteren bevorzugten Ausführungsformen können ein oder mehrere Referenzwerte für die Überprüfung 502, insbesondere ein oder mehrere CMAC-Referenzwerte für durch das Kryptografiemodul 400 zu überprüfende Nachrichten, dem Kryptografiemodul 400 durch die Recheneinrichtung 100 bereitgestellt werden. Beispielsweise kann die Recheneinrichtung 100 die Referenzwerte bzw. CMAC-Referenzwerte dem Kryptografiemodul 400 zusammen mit der Mehrzahl N' der zu überprüfenden Nachrichten übermitteln.

Bei weiteren bevorzugten Ausführungsformen kann hierfür beispielsweise das folgende Datenformat verwendet werden. Einer zu überprüfenden Nachricht ("Plaintext") wird ein Indexwert zugewiesen, der eine eindeutige Identifikation der Nachricht innerhalb der Mehrzahl N' der zu überprüfenden Nachrichten ermöglicht. Optional wird der zu überprüfenden Nachricht ein (CMAC-) Referenzwert zugeordnet. Weiter optional wird der zu überprüfenden Nachricht eine Schlüsselinformation ("Key ID") zugeordnet, die einen spezifischen kryptografischen Schlüssel charakterisiert, der mit der zu überprüfenden Nachricht assoziiert ist. Ein Datensatz des vorstehend beispielhaft beschriebenen Datenformats kann bei weiteren bevorzugten Ausführungsformen demzufolge wenigstens eines der folgenden Elemente enthalten: a) Indexwert, b) Inhalt der Nachricht ("Plaintext"), c) (CMAC-) Referenzwert, d) Schlüsselinformation ("Key ID"). Bei weiteren bevorzugten Ausführungsformen können in dem Schritt 304 (Fig. 2) des Übermittelns zusätzlich zu der zu überprüfenden Nachricht gemäß weiteren bevorzugten Ausführungsformen auch eines oder mehrere der vorstehend genannten Elemente a), c), d) des beispielhaft beschriebenen Datenformat an das Kryptografiemodul 400 übermittelt werden, wobei wiederum vorteilhaft die genannte Mehrzahl M' von Nachrichten bzw. eine entsprechende Mehrzahl der vorstehend genannten Datensätze, die mit der genannten Mehrzahl M' der Nachrichten korrespondiert, an das Kryptografiemodul 400 übermittelt werden.

In Schritt 504 gemäß Figur 3 sendet das Kryptografiemodul 400 das Ergebnis E (Figur 1) der Überprüfung 502 (Figur 3) an die Recheneinrichtung 100, wobei die Recheneinrichtung 100 das vorstehend bereits unter Bezugnahme auf Figur 2 beschriebenen Verfahren in Abhängigkeit von dem Ergebnis E mit den Schritten 306 und 308 fortsetzen kann.

Bei weiteren bevorzugten Ausführungsformen ergeben sich durch die Übermittlung 302 (Fig. 2) der Mehrzahl N' von Nachrichten von der Recheneinrichtung 100 an das Kryptografiemodul 400 weitere Vorteile dadurch, dass auch das Kryptografiemodul 400 mehrere übermittelte Nachrichten auf einmal überprüfen kann, insbesondere ohne hierbei weiter mit der Recheneinrichtung 100 zu kommunizieren (oder die Überprüfung der Mehrzahl N' von Nachrichten für eine Kommunikation mit der Recheneinrichtung 100 zu unterbrechen), beispielsweise zum Nachladen einzelner weiterer zu überprüfender Nachrichten. Vielmehr kann die genannte Mehrzahl N' von Nachrichten zunächst innerhalb des Kryptografiemoduls 400 in der beschriebenen Weise überprüft werden, vergleiche Schritt 502 gemäß Figur 3, und erst nach einer vollständigen Überprüfung der genannten Mehrzahl N' wird das Ergebnis E der Recheneinrichtung 100 mitgeteilt.

Bei weiteren bevorzugten Ausführungsformen, vergleiche das vereinfachte Flussdiagramm aus Figur 4, ist vorgesehen, dass die Recheneinrichtung 100 dazu ausgebildet ist, auf eine vorgebbare Mindestanzahl von empfangenen Nachrichten zu warten, vergleiche Schritt 310, bevor die Mehrzahl N' (Fig. 1) der empfangenen Nachrichten dem Kryptografiemodul 400 übermittelt wird, vergleiche Schritt 312. Dadurch können vorteilhaft mehrere empfangene Nachrichten durch die Recheneinrichtung 100 gebündelt und in einem Übermittlungsvorgang dem Kryptografiemodul 400 übermittelt werden.

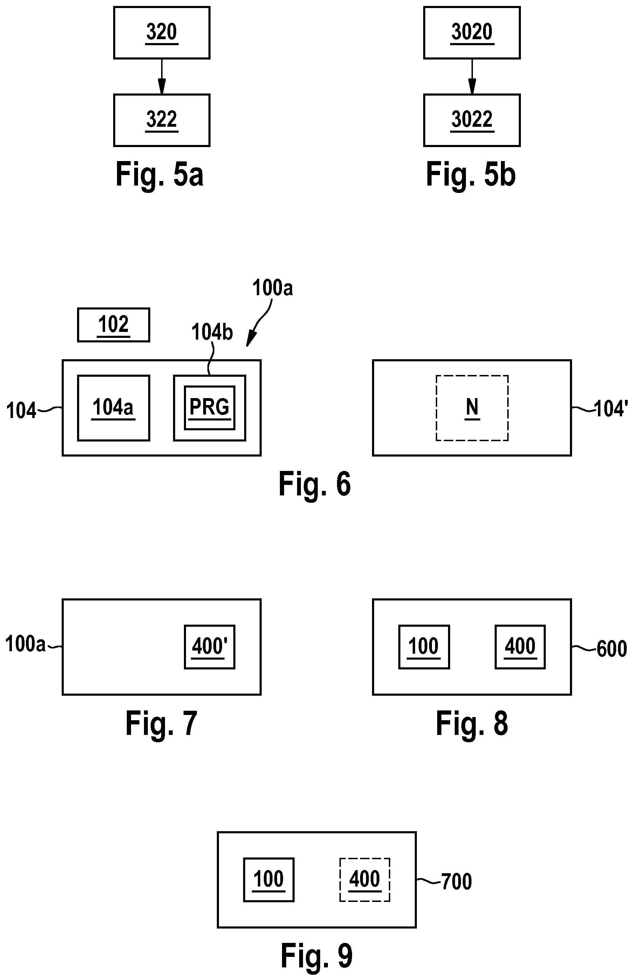

Bei weiteren bevorzugten Ausführungsformen, vergleiche das vereinfachte Flussdiagramm aus Figur 5A, ist vorgesehen, dass die Recheneinrichtung 100 dazu ausgebildet ist, für eine vorgebbare Zeitdauer zu warten, vergleiche Schritt 320, bevor die Mehrzahl N' der, insbesondere während der vorgebbaren Zeitdauer, empfangenen Nachrichten dem Kryptografiemodul 400 übermittelt wird, vergleiche Schritt 322. Auch dadurch können vorteilhaft mehrere bei der Recheneinrichtung 100 von der wenigstens einen weiteren Einheit 200 eingehende Nachrichten N gebündelt werden, bevor diese in Form der Mehrzahl N' an das Kryptografiemodul 400 zum Zwecke der Überprüfung übertragen werden.

Bei weiteren bevorzugten Ausführungsformen, vergleiche das vereinfachte Flussdiagramm gemäß Figur 5B, ist vorgesehen, dass das zumindest zeitweise Speichern empfangener Nachrichten durch die Recheneinrichtung 100 ein zumindest zeitweises Speichern 3020 der empfangenen Nachrichten in einer Speichereinrichtung umfasst, auf die sowohl die Recheneinrichtung 100 als auch das Kryptografiemodul 400 zugreifen kann, wobei das Übermitteln 3022 die folgenden Schritte umfasst: Übergeben von ersten Steuerinformationen S1 (Fig. 1), die einen Speicherbereich der Speichereinrichtung charakterisieren, in dem die empfangenen Nachrichten gespeichert sind. Beispielsweise können die ersten Steuerinformationen S1 wenigstens einen Zeiger auf einen entsprechenden Speicherbereich der Speichereinrichtung enthalten.

Bei weiteren bevorzugten Ausführungsformen können auf diese Weise neben der Übermittlung der Mehrzahl M' der zu überprüfenden Nachrichten auch zusätzlich ein oder mehrere der der jeweiligen Nachricht zugeordneten Elemente a) Indexwert, c) (CMAC-) Referenzwert, d) Schlüsselinformation ("Key ID") effizient an das Kryptografiemodul 400 übermittelt werden.

Figur 6 zeigt schematisch ein vereinfachtes Blockdiagramm gemäß weiteren bevorzugten Ausführungsformen. Beispielsweise kann die Recheneinrichtung 100 aus Fig. 1 die Konfiguration 100a gemäß Fig. 6 aufweisen. Die Konfiguration 100a weist wenigstens eine Recheneinheit 102 auf, und wenigstens eine der Recheneinheit 102 zugeordnete Speichereinrichtung 104 zur zumindest zeitweisen Speicherung eines Computerprogramms PRG, wobei das Computerprogramm PRG insbesondere zur Steuerung eines Betriebs der Recheneinrichtung 100 bzw. Konfiguration 100a, insbesondere zur Ausführung des Verfahrens gemäß den Ausführungsformen, ausgebildet ist.

Bei weiteren bevorzugten Ausführungsformen weist die Recheneinheit 102 wenigstens eines der folgenden Elemente auf: einen Mikroprozessor, einen Mikrocontroller, einen digitalen Signalprozessor (DSP), einen programmierbaren Logikbaustein (z.B. FPGA, field programmable gate array), einen ASIC (anwendungsspezifischen integrierten Schaltkreis), eine Hardwareschaltung. Kombinationen hieraus sind bei weiteren bevorzugten Ausführungsformen auch denkbar.

Bei weiteren bevorzugten Ausführungsformen weist die Speichereinrichtung 104 wenigstens eines der folgenden Elemente auf: einen flüchtigen Speicher 104a, insbesondere Arbeitsspeicher (RAM), einen nichtflüchtigen Speicher 104b, insbesondere Flash-EEPROM. Bevorzugt ist das Computerprogramm PRG in dem nichtflüchtigen Speicher 104b abgelegt.

Bei weiteren bevorzugten Ausführungsformen ist ferner die vorstehend bereits beschriebene Speichereinrichtung 104' vorgesehen, auf die sowohl die Recheneinrichtung 100, 100a als auch das Kryptografiemodul 400 zugreifen können. Wie ebenfalls bereits beschrieben können bei weiteren bevorzugten Ausführungsformen von der Recheneinrichtung 100, 100a empfangene Nachrichten N zumindest zeitweise in der Speichereinrichtung 104' gespeichert werden. Bei weiteren bevorzugten Ausführungsformen kann hierfür wenigstens ein Empfangspuffer für zu empfangende Nachrichten definiert sein.

Bei weiteren bevorzugten Ausführungsformen kann die Speichereinrichtung 104' auch einen Teil der Speichereinrichtung 104 bilden bzw. in diese integriert sein. Auf diese Weise können besonders effizient Nachrichten N von der Recheneinrichtung 100 an das Kryptografiemodul 400 übermittelt werden. Beispielsweise kann bei weiteren bevorzugten Ausführungsformen das Übertragen der ersten Steuerinformationen S1 von der Recheneinrichtung 100 an das Kryptografiemodul 400 ausreichend sein, damit das Kryptografiemodul 400 zu überprüfenden Nachrichten aus der Speichereinrichtung 104' lesen bzw. laden kann.

Bei weiteren bevorzugten Ausführungsformen ist vorgesehen, dass die ersten Steuerinformationen S1 wenigstens einen Zeiger (beispielsweise auf einen die zu überprüfenden Nachrichten N umfassenden Speicherbereich der Speichereinrichtung 104') und/oder eine Anzahl der empfangenen Nachrichten umfassen.

Bei weiteren bevorzugten Ausführungsformen ist vorgesehen, dass die Recheneinrichtung 100, 100a dazu ausgebildet ist, zweite Steuerinformationen S2 (Fig. 1) an das Kryptografiemodul 400 zu übergeben, wobei die zweiten Steuerinformationen S2 einen Speicherbereich bzw. eine Adresse in der Speichereinrichtung 104' charakterisieren, in welchen Speicherbereich bzw. an welche Adresse das Kryptografiemodul 400 ein bzw. das Ergebnis E (Fig. 1) der Überprüfung 502 (Fig. 3) schreiben soll.

Bei weiteren bevorzugten Ausführungsformen ist vorgesehen, dass die Recheneinrichtung 100, 100a dazu ausgebildet ist, keine Verarbeitung einer empfangenen Nachricht N auszuführen, wenn die empfangene Nachricht nicht bereits durch das Kryptografiemodul 400 überprüft worden ist. Dadurch ist sichergestellt, dass nur durch das Kryptografiemodul 400 überprüfte Nachrichten verarbeitet werden.

Bei weiteren bevorzugten Ausführungsformen, vergleiche das vereinfachte Blockdiagramm gemäß Figur 7, ist vorgesehen, dass das Kryptografiemodul 400' in die Recheneinrichtung 100a integriert ist.

Bei weiteren bevorzugten Ausführungsformen, vergleiche das vereinfachte Blockdiagramm gemäß Figur 8, ist vorgesehen, dass das Kryptografiemodul 400 auf demselben Halbleitersubstrat 600 angeordnet ist wie die Recheneinrichtung 100, was eine besonders klein bauende Konfiguration ergibt.

Bei weiteren bevorzugten Ausführungsformen ist vorgesehen, dass das Kryptografiemodul 400, 400' dazu ausgebildet ist, ein Ergebnis E der Überprüfung 502 (Fig. 3) an die Recheneinrichtung 100, 100a zu senden, wobei das Senden insbesondere das Schreiben von das Ergebnis E charakterisierenden Ergebnisinformationen in einen vorgebbaren Speicherbereich der Speichereinrichtung 104' (Fig. 6) umfasst, auf die sowohl die Recheneinrichtung 100, 100a als auch das Kryptografiemodul 400, 400' zugreifen können. Bei weiteren bevorzugten Ausführungsformen können unterschiedliche Ergebniswerte des Ergebnisses E, die den unterschiedlichen Nachrichten der Mehrzahl M' zugeordnet sind, beispielsweise durch den vorstehend bereits beschriebenen Indexwert ergänzt werden, um eine eindeutige Zuordnung des jeweiligen Ergebniswerts zu einer entsprechenden überprüften Nachricht zu ermöglichen.

Weitere bevorzugte Ausführungsformen beziehen sich auf eine Verwendung der Recheneinrichtung 100, 100a gemäß den Ausführungsformen und/oder des Verfahrens gemäß den Ausführungsformen und/oder des Kryptografiemoduls 400, 400' gemäß den Ausführungsformen zur Verarbeitung von Nachrichten N (oder allgemein beliebigen Daten), insbesondere von über ein Bussystem eines Fahrzeugs, insbesondere Kraftfahrzeugs, übermittelten Nachrichten.

Bei weiteren bevorzugten Ausführungsformen, vergleiche das schematische Blockdiagramm gemäß Figur 9, ist die Recheneinrichtung 100 Bestandteil eines Steuergeräts 700, insbesondere für ein Kraftfahrzeug, wobei optional das Kryptografiemodul 400 ebenfalls einen Teil des Steuergeräts 700 bilden kann.

Bei weiteren bevorzugten Ausführungen kann auch vorgesehen sein, dass die Recheneinrichtung 100 alternativ oder ergänzend zu den von der externen Einheit 200 zu empfangenden Nachrichten N generell Daten bzw. Nachrichten aus anderen Quellen (beispielsweise auch selbst durch die Recheneinrichtung 100 gebildet) erhält bzw. ermittelt und diese optional unter Anwendung eines kryptografischen Verfahrens bearbeitet, beispielsweise mit einer kryptografischen Signatur versieht. Hierzu kann die Recheneinrichtung 100 bei weiteren bevorzugten Ausführungsformen vergleichbar zu dem vorstehend unter Bezugnahme auf Figur 2 beschriebenen Prozess die genannten (z.B. selbst gebildeten) Nachrichten dem Kryptografiemodul 400 übermitteln, vorzugsweise wiederum eine Mehrzahl der genannten Nachrichten, wobei das Kryptografiemodul 400 diese Nachrichten anstelle der vorstehend unter Bezugnahme auf Figur 3 beschriebenen Überprüfung 502 mit der kryptografischen Signatur versieht, vorzugsweise alle der genannten Mehrzahl der Nachrichten zunächst mit der Signatur versieht, und die mit der Signatur versehenen Nachrichten sodann an die Recheneinrichtung 100 übermittelt, die bei weiteren bevorzugten Ausführungsformen die signierten Nachrichten dann beispielsweise an weitere Recheneinrichtungen bzw. Steuergeräte übermitteln kann. Bei weiteren bevorzugten Ausführungsformen kann auch für diese Erzeugung bzw. Ergänzung der Signatur und den entsprechenden Datenaustausch zwischen der Recheneinrichtung 100 und dem Kryptografiemodul 400 die vorstehend unter Bezugnahme auf Figur 6 beschriebene Speichereinrichtung 104' verwendet werden, auf die beide Vorrichtungen 100, 400 zugreifen können. Mit anderen Worten kann bei weiteren bevorzugten Ausführungsformen vorgesehen sein, auch für die Signaturerzeugung durch das Kryptografiemodul 400 einen entsprechenden Datenaustausch mit der Recheneinrichtung 100 zeigerbasiert auszuführen, in dem die Recheneinrichtung 100 mit dem Kryptografiemodul 400 entsprechende Zeiger auf ansprechende Speicherbereiche der gemeinsam nutzbaren Speichereinrichtung 104' austauscht, wobei diese Speicherbereiche beispielsweise die mit der Signatur zu versehenen Nachrichten und/oder die mit der Signatur versehenen Nachrichten umfassen.

Das Prinzip gemäß den Ausführungsformen ermöglicht eine besonders effiziente Verarbeitung von Nachrichten N durch die Recheneinrichtung 100, 100a. Dies betrifft sowohl eine Verarbeitung von Nachrichten, die in der Recheneinrichtung 100, 100a von der externen Einheit 200 empfangen werden, als auch Nachrichten, die in der Recheneinrichtung 100 gebildet bzw. signiert werden sollen. Die jeweilige Übertragung einer Mehrzahl N' von Nachrichten an das Kryptografiemodul 400 und/oder eine Bearbeitung der Mehrzahl N' von Nachrichten durch das Kryptografiemodul 400 bedingt eine Ersparnis von insbesondere Rechenressourcen der Recheneinrichtung 100, 100a und vermeidet einen bei konventionellen Systemen anfallenden Kommunikationsoverhead, bei denen zu überprüfende Nachrichten einzeln von der Recheneinrichtung bearbeitet war bzw. an ein Kryptografiemodul 400 übermittelbar sind.

Ferner ergibt sich durch die Anwendung des Prinzips gemäß den Ausführungsformen eine Minimierung von Übertragungsvorgängen von der Recheneinrichtung 100, 100a zu dem Kryptografiemodul 400, insbesondere bezüglich sicherheitskritischer Informationen, wodurch die Sicherheit weiter gesteigert wird.

Bei weiteren bevorzugten Ausführungsformen kann ein Wert der Mehrzahl N' von Nachrichten konfiguriert bzw. parametriert werden, ebenso wie die vorgebbare Mindestanzahl von empfangenen Nachrichten, auf die gewartet wird (vergleiche Schritt 310 aus Figur 4) und/oder die vorgebbare Zeitdauer gemäß Schritt 320 aus Figur 5A. Dadurch kann das Prinzip gemäß den Ausführungsformen effizient an verschiedene Zielsysteme wie beispielsweise Steuergeräte angepasst werden, wobei insbesondere eine Berücksichtigung der Kommunikationslast der jeweiligen Steuergeräte (Anzahl von zu verarbeitenden Nachrichten pro Zeit) und/oder der Rechenressourcen und/oder Speicherressourcen möglich ist. Des Weiteren bietet das Prinzip gemäß den Ausführungsformen eine gesteigerte Flexibilität bezüglich der Konfigurierbarkeit einer Verarbeitung von Nachrichten N durch die Recheneinrichtung 100, 100a.

## Patentansprüche

1. Recheneinrichtung (100; 100a), insbesondere für ein Steuergerät (700) eines Kraftfahrzeugs, wobei die Recheneinrichtung (100; 100a) dazu ausgebildet ist, Nachrichten (N) von wenigstens einer externen Einheit (200) zu empfangen (300), wobei die Recheneinrichtung (100; 100a) dazu ausgebildet ist, die empfangenen Nachrichten (N) zumindest zeitweise zu speichern (302) und eine Mehrzahl (N') der empfangenen Nachrichten (N) einem Kryptografiemodul (400; 400') zu übermitteln (304), das dazu ausgebildet ist, eine Überprüfung (502) der übermittelten Nachrichten (N') auszuführen, **dadurch gekennzeichnet, dass** die Recheneinrichtung (100; 100a) dazu ausgebildet ist, ein Ergebnis (E) der Überprüfung (502) von dem Kryptografiemodul (400; 400') zu empfangen (306) und wenigstens eine der Mehrzahl (N') der empfangenen Nachrichten (N) in Abhängigkeit des Ergebnisses (E) der Überprüfung (502) zu verarbeiten (308).

2. Recheneinrichtung (100; 100a) nach Anspruch 1, wobei die Recheneinrichtung (100; 100a) dazu ausgebildet ist, auf einen vorgebbare Mindestanzahl von empfangenen Nachrichten zu warten (310), bevor die Mehrzahl (N') der empfangenen Nachrichten (N) dem Kryptografiemodul (400; 400') übermittelt (312) wird.

3. Recheneinrichtung (100; 100a) nach wenigstens einem der vorstehenden Ansprüche, wobei die Recheneinrichtung (100; 100a) dazu ausgebildet ist, für eine vorgebbare Zeitdauer zu warten (320), bevor die Mehrzahl (N') der, insbesondere während der vorgebbaren Zeitdauer, empfangenen Nachrichten (N) dem Kryptografiemodul (400; 400') übermittelt (322) wird.

4. Recheneinrichtung (100; 100a) nach wenigstens einem der vorstehenden Ansprüche, wobei das zumindest zeitweise Speichern (302) empfangener Nachrichten (N) ein zumindest zeitweises Speichern (3020) der empfangenen Nachrichten (N) in einer Speichereinrichtung (104') umfasst, auf die sowohl die Recheneinrichtung (100; 100a) als auch das Kryptografiemodul (400; 400') zugreifen kann, und wobei das Übermitteln (304; 312; 322) die folgenden Schritte umfasst: Übergeben (3022) von ersten Steuerinformationen (S1), die einen Speicherbereich der Speichereinrichtung (104') charakterisieren, in dem die empfangenen Nachrichten (N) gespeichert sind.

5. Recheneinrichtung (100; 100a) nach Anspruch 4, wobei die ersten Steuerinformationen (S1) wenigstens einen Zeiger und/oder eine Anzahl der empfangenen Nachrichten (N) umfassen.

6. Recheneinrichtung (100; 100a) nach wenigstens einem der vorstehenden Ansprüche, wobei die Recheneinrichtung (100; 100a) dazu ausgebildet ist, zweite Steuerinformationen an das Kryptografiemodul (400; 400') zu übergeben, wobei die zweiten Steuerinformationen einen Speicherbereich bzw. eine Adresse in der Speichereinrichtung (104') charakterisieren, in welchen Speicherbereich bzw. an welche Adresse das Kryptografiemodul (400; 400') ein bzw. das Ergebnis (E) der Überprüfung (502) schreiben soll.

7. Recheneinrichtung (100; 100a) nach wenigstens einem der vorstehenden Ansprüche, wobei die Recheneinrichtung (100; 100a) dazu ausgebildet ist, keine Verarbeitung (308) einer empfangenen Nachricht auszuführen, wenn die empfangene Nachricht nicht bereits durch das Kryptografiemodul (400; 400') überprüft (502) worden ist.

8. Recheneinrichtung (100; 100a) nach wenigstens einem der vorstehenden Ansprüche, wobei das Kryptografiemodul (400; 400') in die Recheneinrichtung (100; 100a) integriert ist und/oder wobei das Kryptografiemodul (400; 400') auf demselben Halbleitersubstrat (600) angeordnet ist wie die Recheneinrichtung (100; 100a).

9. Verfahren zum Betreiben einer Recheneinrichtung (100; 100a), insbesondere für ein Steuergerät (700) eines Kraftfahrzeugs, wobei die Recheneinrichtung (100; 100a) Nachrichten (N) von wenigstens einer externen Einheit (200) empfängt (300), wobei die Recheneinrichtung (100; 100a) die empfangenen Nachrichten (N) zumindest zeitweise speichert (302) und eine Mehrzahl (N') der empfangenen Nachrichten (N) einem Kryptografiemodul (400; 400') übermittelt (304), das dazu ausgebildet ist, eine Überprüfung (502) der übermittelten Nachrichten (N') auszuführen, das Verfahren **dadurch gekennzeichnet, dass** die Recheneinrichtung (100; 100a) ein Ergebnis (E) der Überprüfung (502) von dem Kryptografiemodul (400; 400') empfängt (306) und wenigstens eine der Mehrzahl (N') der empfangenen Nachrichten (N) in Abhängigkeit des Ergebnisses (E) der Überprüfung (502) verarbeitet (308).

10. System aufweisend eine Recheneinrichtung (100; 100a) nach wenigstens einem der Ansprüche 1 bis 8 und ein Kryptografiemodul (400; 400') für die Recheneinrichtung (100; 100a), wobei das Kryptografiemodul (400; 400') dazu ausgebildet ist, eine Mehrzahl (N') von Nachrichten von der Recheneinrichtung (100; 100a) zu empfangen (500) und eine Überprüfung der empfangenen Nachrichten auszuführen (502).

11. System nach Anspruch 10, wobei das Ausführen (502) der Überprüfung unter Verwendung eines schlüsselbasierten Nachrichtenauthentifizierungscodes, CMAC, englisch: Cipher-based Message Authentication Code, erfolgt.

12. System nach wenigstens einem der Ansprüche 10 bis 11, wobei das Kryptografiemodul (400; 400') dazu ausgebildet ist, ein Ergebnis (E) der der Überprüfung (502) an die Recheneinrichtung (100; 100a) zu senden (504), wobei das Senden (504) insbesondere das Schreiben von das Ergebnis (E) charakterisierenden Ergebnisinformationen in einen vorgebbaren Speicherbereich einer Speichereinrichtung (104') umfasst, auf die sowohl die Recheneinrichtung (100; 100a) als auch das Kryptografiemodul (400; 400') zugreifen können.

13. Verwendung der Recheneinrichtung (100; 100a) nach wenigstens einem der Ansprüche 1 bis 8 und/oder des Verfahrens nach Anspruch 9 und/oder des Systems nach wenigstens einem der Ansprüche 10 bis 12 zur Verarbeitung von Nachrichten (N), insbesondere von über ein Bussystem eines Fahrzeugs, insbesondere Kraftfahrzeugs, übermittelten Nachrichten.

## Claims

1. Computing device (100; 100a), in particular for a control unit (700) of a motor vehicle, wherein the computing device (100; 100a) is designed to receive (300) messages (N) from at least one external unit (200), wherein the computing device (100; 100a) is designed to store (302) the received messages (N) at least temporarily and to transmit (304) a plurality (N') of the received messages (N) to a cryptographic module (400; 400') which is designed to check (502) the transmitted messages (N'),
**characterized in that**
the computing device (100; 100a) is designed to receive (306) a result (E) of the check (502) from the cryptographic module (400; 400') and to process (308) at least one of the plurality (N') of received messages (N) on the basis of the result (E) of the check (502).

2. Computing device (100; 100a) according to Claim 1, wherein the computing device (100; 100a) is designed to wait (310) for a predefinable minimum number of received messages before the plurality (N') of received messages (N) are transmitted (312) to the cryptographic module (400; 400').

3. Computing device (100; 100a) according to at least one of the preceding claims, wherein the computing device (100; 100a) is designed to wait (320) for a predefinable period of time before the plurality (N') of received messages (N), in particular during the predefinable period of time, are transmitted (322) to the cryptographic module (400; 400').

4. Computing device (100; 100a) according to at least one of the preceding claims, wherein the at least temporary storage (302) of received messages (N) comprises at least temporarily storing (3020) the received messages (N) in a memory device (104') that can be accessed both by the computing device (100; 100a) and by the cryptographic module (400; 400'), and wherein the transmission (304; 312; 322) comprises the following steps: transferring (3022) first control information (S1) which characterizes a memory area of the memory device (104') in which the received messages (N) are stored.

5. Computing device (100; 100a) according to Claim 4, wherein the first control information (S1) comprises at least one pointer and/or a number of the received messages (N).

6. Computing device (100; 100a) according to at least one of the preceding claims, wherein the computing device (100; 100a) is designed to transfer second control information to the cryptographic module (400; 400'), wherein the second control information characterizes a memory area or an address in the memory device (104'), in which memory area or to which address the cryptographic module (400; 400') is intended to write a or the result (E) of the check (502).

7. Computing device (100; 100a) according to at least one of the preceding claims, wherein the computing device (100; 100a) is designed not to process (308) a received message if the received message has not already been checked (502) by the cryptographic module (400; 400').

8. Computing device (100; 100a) according to at least one of the preceding claims, wherein the cryptographic module (400; 400') is integrated in the computing device (100; 100a), and/or wherein the cryptographic module (400; 400') is arranged on the same semiconductor substrate (600) as the computing device (100; 100a).

9. Method for operating a computing device (100; 100a), in particular for a control unit (700) of a motor vehicle, wherein the computing device (100; 100a) receives (300) messages (N) from at least one external unit (200), wherein the computing device (100; 100a) stores (302) the received messages (N) at least temporarily and transmits (304) a plurality (N') of the received messages (N) to a cryptographic module (400; 400') which is designed to check (502) the transmitted messages (N'), the method **characterized in that** the computing device (100; 100a) receives (306) a result (E) of the check (502) from the cryptographic module (400; 400') and processes (308) at least one of the plurality (N') of received messages (N) on the basis of the result (E) of the check (502).

10. System comprising a computing device (100; 100a) according to at least one of Claims 1 to 8 and a cryptographic module (400; 400') for the computing device (100; 100a), wherein the cryptographic module (400; 400') is designed to receive (500) a plurality (N') of messages from the computing device (100; 100a) and to check (502) the received messages.

11. System according to Claim 10, wherein the check is carried out (502) using a cipher-based message authentication code, CMAC .

12. System according to at least one of Claims 10 to 11, wherein the cryptographic module (400; 400') is designed to send (504) a result (E) of the check (502) to the computing device (100; 100a), wherein the sending (504) comprises in particular writing result information characterizing the result (E) into a predefinable memory area of a memory device (104') that can be accessed both by the computing device (100; 100a) and by the cryptographic module (400; 400').

13. Use of the computing device (100; 100a) according to at least one of Claims 1 to 8 and/or the method according to Claim 9 and/or the system according to at least one of Claims 10 to 12 for processing messages (N), in particular messages transmitted via a bus system of a vehicle, in particular a motor vehicle.

## Revendications

1. Dispositif de calcul (100 ; 100a), notamment pour un appareil de commande (700) d'un véhicule à moteur, le dispositif de calcul (100 ; 100a) étant conçu pour recevoir (300) des messages (N) en provenance d'au moins une unité externe (200), le dispositif de calcul (100 ; 100a) étant conçu pour stocker (302) au moins temporairement les messages (N) reçus et pour transmettre (304) une pluralité (N') des messages (N) reçus à un module cryptographique (400 ; 400') qui est conçu pour effectuer un contrôle (502) des messages (N') transmis,
**caractérisé en ce que**
le dispositif de calcul (100 ; 100a) est conçu pour recevoir (306) un résultat (E) du contrôle (502) en provenance du module cryptographique (400 ; 400') et pour traiter (308) au moins l'un de la pluralité (N') des messages (N) reçus en fonction du résultat (E) du contrôle (502).

2. Dispositif de calcul (100 ; 100a) selon la revendication 1, le dispositif de calcul (100 ; 100a) étant conçu pour attendre (310) un nombre minimal prédéfinissable de messages reçus, avant que la pluralité (N') des messages (N) reçus ne soit transmise (312) au module cryptographique (400 ; 400').

3. Dispositif de calcul (100 ; 100a) selon au moins l'une des revendications précédentes, le dispositif de calcul (100 ; 100a) étant conçu pour attendre (320) une durée prédéfinissable avant que la pluralité (N') des messages (N) reçus, en particulier pendant la durée prédéfinissable, ne soit transmise (322) au module cryptographique (400 ; 400').

4. Dispositif de calcul (100 ; 100a) selon au moins l'une des revendications précédentes, dans lequel le stockage (302) au moins temporaire des messages (N) reçus comprend un stockage (3020) au moins temporaire des messages (N) reçus dans un dispositif de mémoire (104') auquel peuvent accéder aussi bien le dispositif de calcul (100 ; 100a) que le module cryptographique (400 ; 400'), et dans lequel la transmission (304 ; 312 ; 322) comprend les étapes suivantes : le transfert (3022) de premières informations de commande (S1) qui caractérisent une zone de mémoire du dispositif de mémoire (104') dans laquelle sont stockés les messages (N) reçus.

5. Dispositif de calcul (100 ; 100a) selon la revendication 4, dans lequel les premières informations de commande (S1) comprennent au moins un pointeur et/ou un nombre des messages (N) reçus.

6. Dispositif de calcul (100 ; 100a) selon au moins l'une des revendications précédentes, le dispositif de calcul (100 ; 100a) étant conçu pour transférer des deuxièmes informations de commande au module cryptographique (400 ; 400'), les deuxièmes informations de commande caractérisant une zone de mémoire ou une adresse dans le dispositif de mémoire (104'), zone de mémoire dans laquelle ou adresse à laquelle le module cryptographique (400 ; 400') doit écrire un résultat ou le résultat (E) du contrôle (502).

7. Dispositif de calcul (100 ; 100a) selon au moins l'une des revendications précédentes, le dispositif de calcul (100 ; 100a) étant conçu pour n'exécuter aucun traitement (308) d'un message reçu lorsque le message reçu n'a pas déjà été contrôlé (502) par le module cryptographique (400 ; 400').

8. Dispositif de calcul (100 ; 100a) selon au moins l'une des revendications précédentes, le module cryptographique (400 ; 400') étant intégré dans le dispositif de calcul (100 ; 100a) et/ou le module cryptographique (400 ; 400') étant disposé sur le même substrat semi-conducteur (600) que le dispositif de calcul (100 ; 100a).

9. Procédé de fonctionnement d'un dispositif de calcul (100 ; 100a), notamment pour un appareil de commande (700) d'un véhicule à moteur, le dispositif de calcul (100 ; 100a) recevant (300) des messages (N) en provenance d'au moins une unité externe (200), le dispositif de calcul (100 ; 100a) stockant (302) au moins temporairement les messages (N) reçus et transmettant (304) une pluralité (N') des messages (N) reçus à un module cryptographique (400 ; 400') qui est conçu pour effectuer un contrôle (502) des messages (N') transmis, le procédé étant **caractérisé en ce que** le dispositif de calcul (100 ; 100a) reçoit (306) un résultat (E) du contrôle (502) en provenance du module cryptographique (400 ; 400') et traite (308) au moins l'un de la pluralité (N') des messages (N) reçus en fonction du résultat (E) du contrôle (502).

10. Système comprenant un dispositif de calcul (100 ; 100a) selon au moins l'une des revendications 1 à 8 et un module cryptographique (400 ; 400') destiné au dispositif de calcul (100 ; 100a), le module cryptographique (400 ; 400') étant conçu pour recevoir (500) une pluralité (N') de messages en provenance du dispositif de calcul (100 ; 100a) et pour effectuer (502) un contrôle des messages reçus.

11. Système selon la revendication 10, dans lequel l'exécution (502) du contrôle est effectuée en utilisant un code d'authentification de message basé sur une clé, CMAC, en anglais : Cipher-based Message Authentication Code.

12. Système selon au moins l'une des revendications 10 à 11, dans lequel le module cryptographique (400 ; 400') est conçu pour envoyer (504) un résultat (E) du contrôle (502) au dispositif de calcul (100 ; 100a), l'envoi (504) comprenant en particulier l'écriture d'informations de résultat caractérisant le résultat (E) dans une zone de mémoire prédéfinissable d'un dispositif de mémoire (104') auquel peuvent accéder aussi bien le dispositif de calcul (100 ; 100a) que le module cryptographique (400 ; 400').

13. Utilisation du dispositif de calcul (100 ; 100a) selon au moins l'une des revendications 1 à 8 et/ou du procédé selon la revendication 9 et/ou du système selon au moins l'une des revendications 10 à 12 pour le traitement de messages (N), en particulier de messages transmis par l'intermédiaire d'un système de bus d'un véhicule, notamment d'un véhicule à moteur.
